(19) Europäisches Patentamt / European Patent Office / Office européen des brevets

(11) **EP 3 385 899 A1**

(12) **DEMANDE DE BREVET EUROPEEN**

(43) Date de publication:
**10.10.2018 Bulletin 2018/41**

(51) Int Cl.:
***G06Q 50/10*** *(2012.01)*

(21) Numéro de dépôt: **18158145.5**

(22) Date de dépôt: **22.02.2018**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD TN**

(30) Priorité: **05.04.2017 FR 1752947**

(71) Demandeur: **STMicroelectronics (Rousset) SAS
13790 Rousset (FR)**

(72) Inventeurs:
• **DEMAJ, Pierre
  06200 NICE (FR)**
• **FOLLIOT, Laurent
  06620 GOURDON (FR)**

(74) Mandataire: **Casalonga
Casalonga & Partners
Bayerstraße 71/73
80335 München (DE)**

(54) **PROCÉDÉ DE DÉTECTION EN TEMPS RÉEL D'UNE SCÈNE PAR UN APPAREIL ET APPAREIL CORRESPONDANT**

(57) Procédé de détection en temps réel d'au moins une scène par un appareil parmi un ensemble de scènes de référence possibles, comprenant une acquisition de valeurs courantes d'attributs (Ai) à partir de valeurs de mesures fournies par des capteurs (CPTj) et un parcours (20) d'un chemin (PTH) au sein d'un arbre de décision (ALC) dont les noeuds ($ND_i$) sont respectivement associés auxdits attributs (Ai) en prenant en compte à chaque noeud ($ND_i$) du chemin, la valeur courante de l'attribut correspondant (Ai) de façon à obtenir en sortie du chemin une scène ($S_d$) parmi l'ensemble de scènes de référence ($S_k$), ladite scène obtenue formant la scène détectée ($S_d$), procédé comprenant en outre une élaboration d'un indice de confiance (SC) associé à la scène détectée ($S_d$).

FIG.2

**Description**

Des modes de mise en oeuvre et de réalisation de l'invention concernent la détection en temps réel d'une scène par un appareil, notamment mais non exclusivement un appareil de communication sans fil, par exemple un téléphone mobile cellulaire intelligent (« smartphone ») ou encore une tablette numérique, équipé d'au moins un capteur comme par exemple un accéléromètre.

Une scène s'entend dans un sens très large comme englobant notamment une scène caractéristique de l'environnement dans lequel se trouve l'appareil, que l'appareil soit porté par un utilisateur susceptible d'être mobile, par exemple un téléphone mobile cellulaire, (scène du type « Bus », « train », « restaurant », « bureau »....), ou que l'appareil soit un objet fixe, connecté ou non, (radiateur par exemple dans une application de domotique), la scène caractéristique de l'environnement pouvant être par exemple du type « pièce humide », « pièce sèche », « jour », « nuit », « volets fermés », « volets ouverts ».....

Une scène peut également englober une scène caractéristique d'une activité pratiquée par le porteur de l'appareil, par exemple une montre intelligente (« smart watch »), une telle scène pouvant être alors par exemple « marche », « course à pied », etc...

Bien que l'invention puisse s'appliquer à tout type d'appareil et à tout type de scène, on va maintenant citer plus précisément les appareils de communication sans fil.

Certains appareils de communication sans fil comme par exemple certains types de « smartphones » ou de tablettes sont capables aujourd'hui d'effectuer des détections de scène ce qui permet de déterminer dans quel environnement se situe l'utilisateur du téléphone ou de la tablette. Cela peut ainsi permettre à une tierce partie, par exemple un annonceur publicitaire ou un organisme culturel par exemple d'envoyer des informations pertinentes en liaison avec le lieu dans lequel se situe l'utilisateur de l'appareil.

Ainsi, par exemple si l'utilisateur se situe dans un lieu touristique donné, on peut lui envoyer ainsi des adresses de restaurant à proximité de l'endroit où il se trouve. De même, on peut également lui envoyer des informations relatives à certains monuments qui se situent à proximité de l'endroit où il se trouve.

Par détection de scène, on entend notamment une discrimination de la scène dans laquelle se trouve l'appareil de communication sans fil. Plusieurs solutions connues existent pour détecter (discriminer) une scène. Ces solutions utilisent par exemple un ou plusieurs capteurs dédiés associés généralement à un algorithme spécifique.

Ces capteurs peuvent être des capteurs de mesure environnementaux, c'est à dire notamment tout type de capteur capable de fournir des informations sur l'environnement dans lequel se trouve l'appareil de communication sans fil, incluant par exemple des caractéristiques spatiotemporelles de l'environnement de l'appareil, comme par exemple le caractère temporellement figé ou non de l'environnement, la vitesse d'évolution de la modification spatiotemporelle de l'environnement (à partir de la détection du mouvement de l'appareil) et/ou des caractéristiques sonores et/ou spatiales et/ou visuelles de cet environnement, comme par exemple le niveau de bruit de l'environnement et/ou l'altitude et/ou le niveau de luminosité de l'environnement (à partir par exemple de capteurs tels que des baromètres, des capteurs de proximité, des capteurs optiques .....).

Ces capteurs peuvent être utilisés pour donner par exemple une indication sur l'orientation spatiale de l'appareil, comme par exemple le gyroscope, de façon à faire pivoter l'affichage sur l'écran de l'appareil.

Cela étant, dans un contexte où l'appareil est constamment sous tension (Always-On) et où la durée de vie de la batterie est un critère important, ces capteurs environnementaux sont avantageusement utilisés pour la détection de scène.

Il s'agit là d'une approche multimodale. Et dans ce cas un exemple d'algorithme spécifique peut être un algorithme mettant en oeuvre un arbre binaire de décisions sur la base de descripteurs ou attributs résultant de traitements particuliers (par exemple des filtrages) sur les données brutes issues des capteurs. Ces attributs peuvent être par exemple des moyennes, des valeurs d'énergie, des variances, etc...

Des algorithmes mettant en oeuvre un arbre de décisions sont bien connus de l'homme du métier.

Celui-ci pourra par exemple se référer à toutes fins utiles notamment

à l'article de Syed Amir Hoseini-Tabatabaei et autres intitulé « A survey on Smartphone Based Systems for Opportunistic User Context Recognition », Center for communication Systems Research, University of Surrey, ACM computing surveys, 29 juin 2013, ou

à l'article de Ricco Rakotomalala intitulé « Arbres de Décision », revue MODULAD, 2005, numéro 33, pages 163-187.

En bref un arbre de décision comporte des noeuds, reliés entre eux par des branches aboutissant à des feuilles.

Chaque noeud est associé à un test sur un attribut et chaque feuille correspond à une scène de référence appartenant à un corpus ou ensemble de scènes de références susceptibles d'être détectées par l'appareil à l'issue du parcours de l'arbre.

Il peut y avoir dans l'arbre plusieurs noeuds associés au même test sur un même attribut.

Les noeuds sont reliés par les branches et le choix d'une branche parmi celles partant d'un noeud dépend de la valeur de l'attribut en ce noeud et donc du résultat du test en ce noeud.

Un arbre de décision est construit pour un corpus de scènes donné par un algorithme classique d'apprentissage.

Un avantage d'une détection de scène par un arbre de décision réside dans la rapidité d'exécution.

Cela étant il existe un besoin d'améliorer la fiabilité de la classification obtenue en sortie d'un arbre de décision mis en oeuvre au sein d'un appareil, connecté ou non, par exemple mais non limitativement un appareil de communication sans fil, une montre intelligente, un objet immobile.

Selon un mode de mise en oeuvre et de réalisation il est proposé de répondre à ce besoin.

Selon un autre mode de mise en oeuvre et de réalisation il est proposé de sélectionner les attributs les plus appropriés pour discriminer un corpus de scènes données, le terme « scène » étant pris dans un sens très large comme mentionné ci-avant.

Selon un aspect il est proposé un procédé de détection en temps réel d'au moins une scène par un appareil, notamment un appareil de communication sans fil, par exemple un téléphone mobile cellulaire ou une tablette numérique, parmi un ensemble de scènes de référence possibles.

Le procédé selon cet aspect comprend une acquisition de valeurs courantes d'attributs à partir de valeurs de mesures fournies par des capteurs et un parcours d'un chemin au sein d'un arbre de décision dont les noeuds sont associés à des tests sur ces attributs en prenant en compte à chaque noeud du chemin la valeur courante de l'attribut correspondant de façon à obtenir en sortie du chemin une scène parmi l'ensemble de scènes de référence, ladite scène obtenue formant la scène détectée.

Le procédé comprend en outre une élaboration d'un indice de confiance associée à la scène détectée.

Ceci permet d'améliorer la fiabilité de la détection, par la délivrance de la détection effective (décision « dure » ; hard decision en anglais) accompagnée de son indice de confiance (décision « douce » ; soft decision en anglais).

Cette délivrance peut ainsi permettre de prendre une décision quant à une scène détectée ayant par exemple un faible indice de confiance.

Cette décision dépend de l'application envisagée et peut comprendre par exemple une non prise en compte de cette scène et une prise en compte de la scène précédemment détectée.

Selon un mode de mise en oeuvre permettant une élaboration particulièrement simple et rapide de l'indice de confiance, cette élaboration est effectuée après la détection de la scène détectée et à partir de la connaissance de cette scène détectée, en particulier en effectuant un parcours supplémentaire dudit chemin avec la connaissance à chaque noeud de la scène détectée.

Plus particulièrement, l'élaboration de l'indice de confiance peut comprendre un parcours supplémentaire dudit chemin de l'arbre de décision avec les mêmes valeurs courantes d'attributs, le parcours supplémentaire comportant à chaque noeud dudit chemin,

une prise en compte d'une première probabilité que l'attribut correspondant ait ladite valeur courante connaissant la scène détectée, et

pour chaque scène de référence différente de la scène détectée, une prise en compte d'une deuxième probabilité que l'attribut correspondant ait la valeur courante connaissant cette scène de référence,

une détermination d'un indice de confiance initial à partir de toutes les premières et deuxièmes probabilités prises en compte le long du chemin parcouru, et

ladite élaboration de l'indice de confiance est effectuée à partir de cet indice de confiance initial.

La prise en compte des premières et deuxièmes probabilités peut comporter par exemple un calcul en temps réel de ces probabilités à partir d'histogrammes, ou plus simplement une lecture dans une mémoire de ces probabilités qui ont été précalculées.

L'indice de confiance peut être l'indice de confiance initial ou bien par exemple l'indice de confiance normalisé faisant intervenir la longueur dudit chemin.

En pratique, les premières et deuxièmes probabilités peuvent être lues dans une mémoire.

Selon une variante possible, la détermination de l'indice de confiance initial comprend

une détermination pour chaque noeud du chemin de la moyenne desdites deuxièmes probabilités associées à ce noeud et du logarithme d'un rapport entre la première probabilité associée à ce noeud et ladite moyenne, et

une somme sur tous les noeuds du chemin desdits logarithmes.

Selon une autre variante possible, la détermination de l'indice de confiance initial comprend

une détermination pour chaque noeud du chemin de la moyenne desdites deuxièmes probabilités associées à ce noeud et du logarithme d'un rapport entre la première probabilité associée à ce noeud et ladite moyenne, et

une somme sur tous les noeuds du chemin desdits logarithmes respectivement pondérés par des coefficients de pondération choisis pour accorder plus de poids aux logarithmes associés aux premiers noeuds du chemin.

Par exemple chaque coefficient de pondération est positif et peut être inférieur ou supérieur à 1 selon les cas.

Ainsi, pour un coefficient initial supérieur à 1, typiquement entre 1 et 2, le coefficient de pondération associé à un noeud courant peut être pris égal à la racine carrée du coefficient de pondération associé au noeud précédent.

En variante, le coefficient de pondération associé à un noeud courant de rang i peut être pris égal à $\alpha^i$ où $\alpha$ est un coefficient positif et inférieur à 1.

Selon encore une autre variante possible, la détermination de l'indice de confiance initial comprend une détermination pour chaque noeud du chemin du maximum desdites deuxièmes probabilités associées à ce noeud et du logarithme d'un rapport entre la première probabilité associée à ce noeud et ledit maximum, et une somme sur tous les noeuds du chemin desdits logarithmes.

L'indice de confiance peut être considéré comme un score dont les valeurs peuvent être en général supérieures à un.

Aussi le procédé peut-il comprendre en outre une conversion de l'indice de confiance en une probabilité de confiance à l'aide d'une fonction de conversion prédéterminée.

Les inventeurs ont par ailleurs observé que certains attributs pouvaient ne pas être pertinents pour la détection de certaines scènes. En d'autres termes certains attributs ne permettent pas de discriminer efficacement une scène de référence particulière.

Aussi pour un corpus de scènes de référence, il est particulièrement avantageux de sélectionner les attributs les plus pertinents.

Ainsi selon un mode de mise en oeuvre, le procédé comprend en outre une phase préalable de détermination desdits attributs compte tenu de l'ensemble de scènes de référence possibles.

Cette phase préalable peut être effectuée indépendamment du procédé de détection défini ci-avant.

Ainsi selon un autre aspect il est proposé un procédé de sélection d'attributs de référence utilisables dans un classifieur configuré pour détecter un ensemble ou corpus de scène de référence. Ce classifieur peut être tout type de classifieur ou bien un arbre de décision.

Ladite phase préalable ou le procédé de sélection peut comprendre une élaboration pour chaque attribut de référence d'un ensemble d'attributs de référence possibles, d'un facteur de mérite représentatif de la capacité de l'attribut de référence à discriminer les différentes scènes de référence, et une sélection desdits attributs dudit classifieur ou de l'arbre de décision parmi les attributs de référence en fonction de leur facteur de mérite.

Selon un mode de mise en oeuvre ladite sélection comprend pour chaque attribut de référence une comparaison de la valeur de son facteur de mérite à un seuil, et une sélection comme attributs, des attributs de référence ayant une valeur de facteur de mérite inférieure audit seuil.

En variante, il serait possible de classer les attributs de référence par ordre croissant de leur facteur de mérite et de sélectionner comme attributs un certain nombre fixe d'attributs de référence, par exemple les R premiers attributs de référence ainsi classés.

Selon un mode de mise en oeuvre l'élaboration du facteur de mérite d'un attribut de référence comprend une élaboration de paramètres intermédiaires respectivement relatifs à des couples de scènes de référence, l'élaboration de chaque paramètre intermédiaire relatif à un couple de scène de référence comportant un calcul du produit scalaire canonique entre une première distribution de probabilités des valeurs de l'attribut de référence connaissant une première scène de référence dudit couple et une deuxième distribution de probabilités des valeurs de l'attribut de référence connaissant une deuxième scène de référence dudit couple, et une moyenne de tous les paramètres intermédiaires.

De façon à limiter la plage de valeurs sur laquelle on peut effectuer les produits scalaires canoniques, chaque première distribution de probabilités et chaque deuxième distribution de probabilités peut résulter d'un filtrage des valeurs de l'attribut considéré pour la scène de référence considérée.

Lesdits capteurs peuvent être choisis par exemple dans le groupe formé par un accéléromètre, un gyroscope, un magnétomètre, un capteur audio, un baromètre, un capteur de proximité, un capteur optique.

Selon un autre aspect, il est proposé un appareil, par exemple un appareil de communication sans fil, comprenant des capteurs configurés pour fournir des valeurs de mesure, des moyens de détection configurés pour détecter en temps réel au moins une scène parmi un ensemble ou corpus de scènes de référence possibles et comportant des moyens de mémoire stockant un module logiciel formant un arbre de décision dont les noeuds sont respectivement associés à des tests sur des attributs et dont les sorties correspondent auxdites scènes de référence possibles, des moyens d'acquisition configurés pour acquérir des valeurs courantes desdits attributs, et des moyens de commande configurés pour activer le module logiciel avec lesdites valeurs courantes des attributs de façon à parcourir un chemin au sein dudit arbre de décision et obtenir en sortie du chemin une scène parmi l'ensemble de scènes de référence, ladite scène obtenue formant la scène détectée, et des moyens de traitement configurés pour élaborer un indice de confiance associé à la scène détectée.

Selon un mode de réalisation les moyens de traitement sont configurés pour élaborer l'indice de confiance une fois que la scène a été détectée et à partir de la connaissance de cette scène détectée.

Selon un mode de réalisation les moyens de commande sont configurés pour activer une deuxième fois le module logiciel avec lesdites valeurs courantes des attributs et lui faire parcourir une deuxième fois ledit chemin, et les moyens de traitement comprennent

un premier module de traitement configuré pour, à chaque noeud dudit chemin, prendre en compte une première probabilité que l'attribut correspondant ait ladite valeur courante connaissant la scène détectée et pour chaque scène de référence différente de la scène détectée, prendre en compte une deuxième probabilité que l'attribut correspondant ait la valeur courante connaissant cette scène de référence,

un deuxième module de traitement configuré pour effectuer une détermination d'un indice de confiance initial à partir de toutes les premières et deuxièmes probabilités prises en compte le long du chemin parcouru, et

un troisième module de traitement configuré pour effectuer ladite élaboration de l'indice de confiance à partir de cet indice de confiance initial.

Selon un mode de réalisation les moyens de mémoire contiennent lesdites premières et deuxièmes probabilités et le premier module est configuré pour lire lesdites premières et deuxièmes probabilités dans les moyens de mémoire.

Selon un mode de réalisation, le deuxième module de traitement est configuré

pour effectuer une détermination pour chaque noeud du chemin, de la moyenne desdites deuxièmes probabilités associées à ce noeud et du logarithme d'un rapport entre la première probabilité associée à ce noeud et ladite moyenne et pour effectuer une somme desdits logarithmes sur tous les noeuds du chemin.

En variante, le deuxième module de traitement est configuré

pour effectuer une détermination pour chaque noeud du chemin, de la moyenne desdites deuxièmes probabilités associées à ce noeud et du logarithme d'un rapport entre la première probabilité associée à ce noeud et ladite moyenne, et pour effectuer une somme sur tous les noeuds du chemin desdits logarithmes respectivement pondérés par des coefficients de pondération choisis pour accorder plus de poids aux logarithmes associés aux premiers noeuds du chemin.

Le coefficient de pondération est par exemple positif et inférieur ou supérieur à 1.

Le coefficient de pondération associé à un noeud courant peut être égal à la racine carrée du coefficient de pondération associé au noeud précédent, le coefficient initial étant supérieur à 1.

En variante le coefficient de pondération associé à un noeud courant de rang i peut être égal à $\alpha^i$ où $\alpha$ est un coefficient positif et inférieur à 1.

Selon un autre mode de réalisation possible, le deuxième module de traitement est configuré

pour effectuer une détermination pour chaque noeud du chemin du maximum desdites deuxièmes probabilités associées à ce noeud et du logarithme d'un rapport entre la première probabilité associée à ce noeud et ledit maximum, et pour effectuer une somme sur tous les noeuds du chemin desdits logarithmes.

Les moyens de traitement peuvent comprendre un troisième module configuré pour effectuer une normalisation de l'indice de confiance initial faisant intervenir la longueur dudit chemin.

L'appareil peut avantageusement comprendre en outre des moyens de conversion configurés pour effectuer une conversion de l'indice de confiance en une probabilité de confiance à l'aide d'une fonction de conversion stockée dans les moyens de mémoire.

Les capteurs peuvent être choisis dans le groupe formé par un accéléromètre, un gyroscope, un magnétomètre, un capteur audio, un baromètre, un capteur de proximité, un capteur optique, un capteur de température, d'humidité, de luminosité.

Cette liste n'est cependant pas exhaustive.

L'appareil peut former par exemple un téléphone mobile cellulaire ou une tablette numérique, ou tout type d'objet intelligent, en particulier une montre intelligente, connecté ou non à un réseau internet.

D'autres avantages et caractéristiques de l'invention apparaîtront à l'examen de la description détaillée de modes de mise en oeuvre et de réalisation, nullement limitatifs, et des dessins annexés sur lesquels :

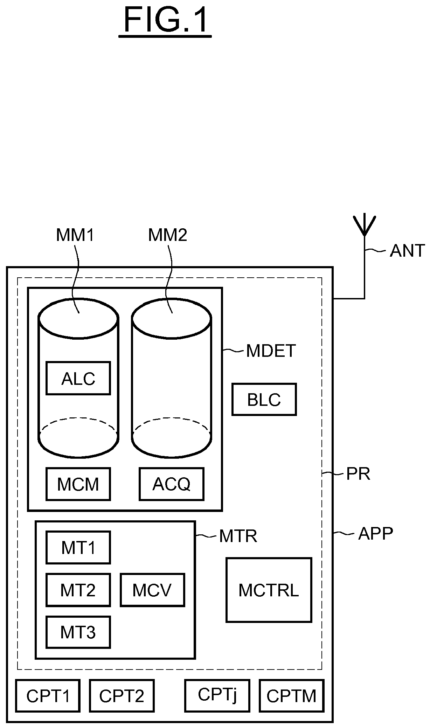

- les figures 1 à 9 illustrent schématiquement différents modes de mise en oeuvre et de réalisation de l'invention.

Sur la figure 1, la référence APP désigne un appareil électronique que l'on considèrera être dans cet exemple non limitatif, un appareil de communication sans fil équipé d'une antenne ANT. Cet appareil peut être un téléphone mobile cellulaire tel qu'un téléphone intelligent (smartphone) ou encore une tablette numérique.

L'appareil APP comporte ici plusieurs capteurs de mesure CPTl-CPTj, j =1 à M.

A titre indicatif, les capteurs CPTj peuvent être choisis dans le groupe formé par un accéléromètre, un gyroscope, un magnétomètre, un capteur audio tel qu'un microphone, un baromètre, un capteur de proximité, un capteur optique.

Bien entendu, l'appareil peut être équipé de plusieurs accéléromètres et/ou de plusieurs gyroscopes et/ou plusieurs magnétomètres et/ou de plusieurs capteurs audio et/ou d'un baromètre, et/ou d'un ou plusieurs capteurs de proximité, et/ou un ou plusieurs capteurs optiques.

Les capteurs audio sont des descripteurs utiles d'environnement. En effet, si l'appareil n'est pas en mouvement, alors le capteur audio peut être intéressant pour détecter la nature de cet environnement. Bien entendu, en fonction des applications, on peut utiliser soit des capteurs environnementaux du type accéléromètres voire gyroscopes ou magnétomètres, soit des capteurs audio ou alors une combinaison de ces deux types de capteurs ou encore d'autres types de capteurs, comme des capteurs non inertiels du type capteur de température, d'humidité, de luminosité.

Ces capteurs de mesure environnementaux, peuvent, en particulier dans une approche multimodale, former en combinaison avec un algorithme classique de discrimination ALC, par exemple du type arbre de décision, destiné à travailler par exemple sur des données brutes filtrées issues de ces capteurs, des moyens de détection MDET configurés pour détecter une scène. Ces moyens MDET peuvent ainsi par exemple détecter si l'appareil APP se situe dans tel ou tel environnement (restaurant, véhicule en mouvement, etc...) ou si le porteur de cet appareil (par exemple une montre intelligente) réalise une activité spécifique (marcher, courir, faire du vélo,...).

On suppose maintenant à titre d'exemple non limitatif que tous les capteurs environnementaux CPT1-CPTM contribuent à la détection de la scène et fournissent des données à des instants de mesure à l'algorithme de discrimination ALC pour permettre de détecter la scène.

L'algorithme de discrimination mis en oeuvre de façon logicielle dans les moyens MDET de détection de scène est ici un arbre de décision ayant réalisé une phase d'apprentissage sur une base de données de mesure des capteurs environnementaux. Un tel arbre de décision, est particulièrement simple à mettre en oeuvre et ne nécessite que quelques kilooctets de mémoire et une fréquence de travail inférieure à 0,01 MHz.

Il est stocké dans une mémoire programme MM1.

Comme on le verra plus en détails ci-après, et comme il est classique en la matière, l'arbre de décision ALC opère sur un vecteur d'attributs $A_i$. L'arbre comprend une série de noeuds. Chaque noeud est affecté à test sur un attribut.

A partir d'un noeud partent deux branches.

Le choix entre les deux branches dépend de la valeur courante de l'attribut associé à ce noeud et donc du résultat du test associé.

Par ailleurs, la sortie de l'arbre comporte des feuilles correspondant à des scènes de référence que l'appareil APP est sensé détecter.

Ces scènes de référence peuvent être par exemple, sans que ceci ne soit limitatif, des scènes « BUS », « BUREAU », « RESTAURANT », « TRAIN » représentatives par exemple de l'environnement dans lequel peut se trouver l'appareil APP, ici le téléphone.

Les moyens de détection MDET comportent également des moyens d'acquisition ACQ configurés pour acquérir des valeurs courantes des attributs à partir des données de mesure issues des capteurs.

D'une façon générale, un attribut peut être une donnée brute issue d'un capteur ou bien une donnée brute filtrée, ou encore une autre variable comme par exemple une moyenne de données sur un certain intervalle de temps, une variance, etc...

Comme on le verra plus en détail ci-après, les moyens de détection sont configurés pour détecter en temps réel au moins une scène parmi l'ensemble ou corpus de scènes de référence possibles.

A cet égard, les moyens de détection MDET comportent des moyens de commande MCM configurés pour activer le module logiciel ALC avec les valeurs courantes des attributs de façon à parcourir un chemin au sein de l'arbre de décision et obtenir en sortie du chemin une scène parmi l'ensemble de scène de référence, cette scène obtenue formant la scène détectée.

Par ailleurs, l'appareil comporte également des moyens de traitement MTR configurés pour élaborer un indice de confiance associé à la scène détectée.

Et, comme on le verra plus en détails ci-après, les moyens de traitement MTR sont configurés pour élaborer l'indice de confiance une fois que la scène a été détectée et à partir de la connaissance de cette scène détectée.

Cet indice de confiance va notamment être élaboré à partir d'un jeu de probabilités contenues une mémoire MM2 des moyens de détection DET.

L'appareil APP comporte également un bloc BLC apte à coopérer avec les moyens de détection MDET pour traiter la scène détectée et transmettre les informations via l'antenne ANT de l'appareil. Bien entendu l'antenne est optionnelle si l'appareil n'est pas un appareil connecté.

L'appareil comporte également des moyens de contrôle MCTRL configurés pour activer successivement les moyens de détection MDET de façon à mettre en oeuvre une succession d'étapes de détection de scènes mutuellement espacées d'intervalles temporels.

Ces différents moyens BLC, MDET, MCTRL et MTR sont par exemple réalisés par des modules logiciels au sein du processeur PR de l'appareil APP.

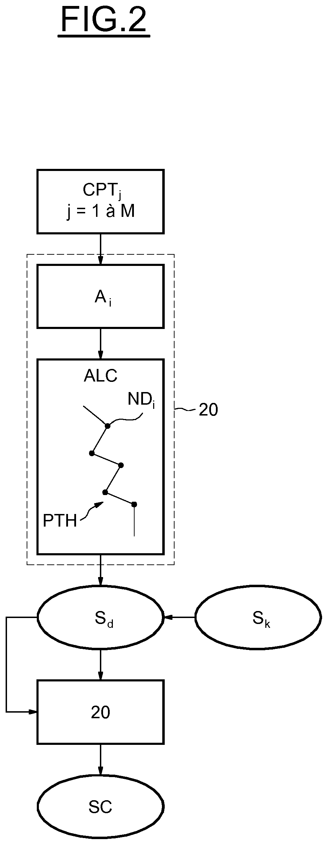

On se réfère maintenant plus particulièrement aux figures 2 et suivantes pour illustrer un exemple d'indice de confiance associé à une scène détectée.

Sur la figure 2, on suppose que les moyens d'acquisition ACQ ont délivré, à partir des M capteurs CPTj, j=1à M, un vecteur d'attributs $A_i$ ayant des valeurs courantes.

Le nombre d'attributs $A_i$ est totalement indépendant du nombre de capteurs.

Les moyens de commande MCM activent alors le module logiciel ALC formant l'arbre de décision avec lesdites valeurs courantes des attributs $A_i$ de façon à parcourir un chemin PTH au sein de cet arbre de décision et obtenir en sortie du chemin une scène détectée $S_d$ parmi le corpus de scènes de référence $S_k$.

Dans le chemin PTH, à chaque noeud $ND_i$ est affecté un test sur un attribut $A_i$. Ce test est par exemple l'opérateur « inférieur à », ou « inférieur ou égal à », ou « supérieur à », ou « supérieur ou égal à », ou « égal à ».

Une fois cette scène $S_d$ détectée, les moyens de commande MCM sont configurés pour activer une deuxième fois l'arbre de décision ALC avec lesdites valeurs courantes des attributs $A_i$ et lui faire parcourir une deuxième fois ledit chemin PTH.

Les moyens de traitement MTR comprennent un premier module de traitement MT1 configuré pour, à chaque noeud $ND_i$ du chemin, effectuer une détermination d'une première probabilité P $(A_i|S_d)$ que l'attribut correspondant $A_i$ est ladite valeur courante connaissant la scène détectée $S_d$.

Par ailleurs, ce premier module de traitement va effectuer, pour chaque scène de référence $S_k$ différente de la scène détectée $S_d$ (k=0 à N-1 si l'on suppose que l'on a N scènes de référence), une détermination d'une deuxième probabilité P $(A_i|S_k)$ que l'attribut correspondant $A_i$ ait la valeur courante connaissant cette scène de référence $S_k$.

En fait, comme il sera expliqué plus en détails ci-après, ces différentes première et deuxième probabilités sont déjà stockées dans la mémoire MM2 car ayant été calculées lors d'une phase initiale utilisant des histogrammes pour les différentes valeurs possibles d'attributs.

La détermination de ces probabilités se résume donc ici à une simple lecture en mémoire.

Le deuxième module de traitement MT2 des moyens de traitement MTR va alors effectuer une détermination d'un indice de confiance initial à partir de toutes les premières et deuxièmes probabilités.

Enfin, un troisième module de traitement MT3 peut être configuré pour effectuer l'élaboration de l'indice de confiance à partir de cet indice de confiance initial.

Plus précisément, cet indice de confiance SC peut être l'indice de confiance initial ou bien par exemple l'indice de confiance initial normalisé par la longueur du chemin PTH.

A titre d'exemple, l'indice de confiance SC associé à la scène détectée $S_d$ peut être déterminé par la formule (I) donnée en annexe.

Dans cette formule (I), « log » désigne la fonction logarithme à base 10. Cela étant l'utilisation d'un logarithme népérien est possible.

En variante, l'indice de confiance SC peut être déterminé par la formule (II) en annexe dans laquelle « max » désigne le maximum.

En variante, il serait possible de déterminer l'indice de confiance SC à partir de la formule (III) donnée en annexe dans laquelle les coefficients $w_i$ sont des coefficients de pondération choisis pour accorder plus de poids aux logarithmes associés aux premiers noeuds du chemin PTH.

Chaque coefficient de pondération $w_i$ est par exemple positif.

Ainsi, le coefficient de pondération $w_i$ associé à un noeud courant NDi peut être égal à la racine carrée du coefficient de pondération $w_{i-1}$ associé au noeud précédent si le coefficient initial est supérieur à 1.

Le premier coefficient de pondération peut par exemple être égal à 1,6.

En variante, le coefficient de pondération associé à un noeud courant de rang i peut être pris égal à $\alpha_i$ ou $\alpha$ est un coefficient positif et inférieur à 1 par exemple égal à 0,9.

La pondération est alors exponentiellement décroissante.

Le score SC forme un indice de confiance associé à la scène détectée $S_d$.

En effet, plus la valeur du score est faible (plus la valeur absolue de la valeur est grande pour des valeurs négatives ou plus la valeur absolue de la valeur est faible pour des valeurs positives), plus la confiance, c'est-à-dire la fiabilité, de la détection est faible. En d'autres termes il y a de fortes chances que la scène détectée ne corresponde pas à la scène dans laquelle se trouve effectivement l'appareil. A contrario, plus le score est élevé, plus la confiance, c'est-à-dire la fiabilité, de la détection de la scène est élevée c'est-à-dire qu'il y a de fortes chances que la scène détectée soit effectivement la bonne.

A titre indicatif, les valeurs du score peuvent par exemple varier entre -20 et +20.

Cela étant, les moyens peuvent comporter en outre des moyens de conversion MCV, par exemple également réalisés sous forme logicielle, configurés pour effectuer une conversion de l'indice de confiance SC en une probabilité de confiance à l'aide d'une fonction de conversion stockée dans la mémoire MM2 par exemple.

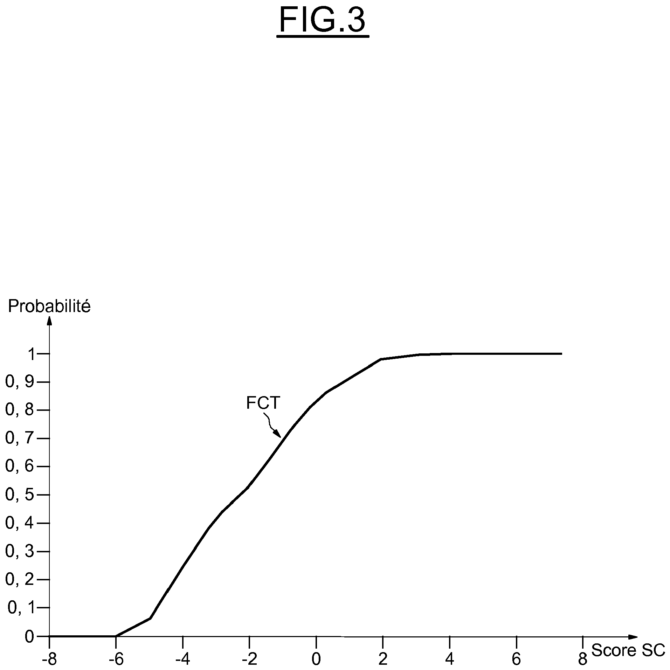

Un exemple d'une telle fonction de conversion FCT est par exemple illustré sur la figure 3.

Dans l'exemple illustré, la fonction FCT a une forme d'une sigmoïde et comporte en abscisse, des scores compris entre -8 et +8.

On reviendra plus en détails ci-après sur un exemple de détermination d'une telle fonction de transfert FCT.

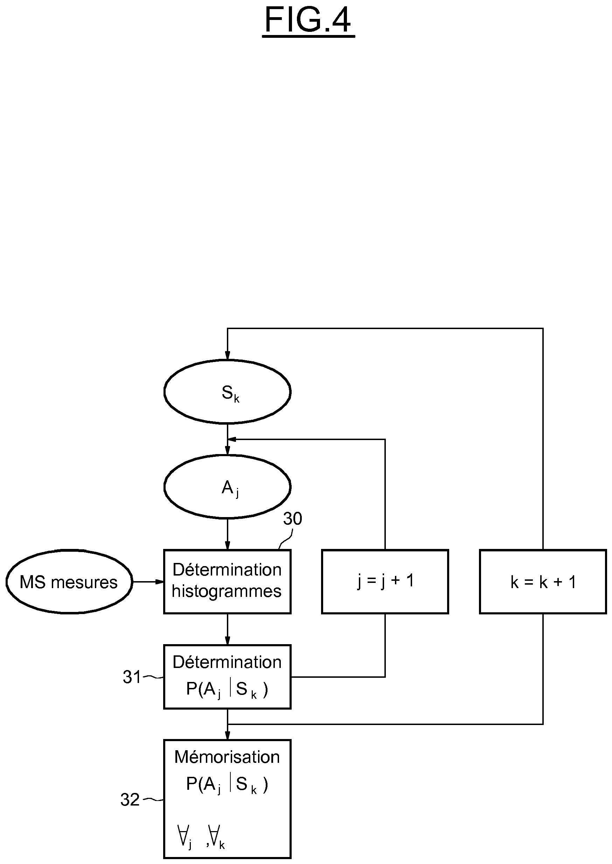

On se réfère maintenant plus particulièrement à la figure 4 pour illustrer un exemple de détermination des probabilités que les attributs aient des valeurs courantes données connaissant une scène détectée.

Plus précisément, pour chaque scène $S_k$ du corpus de scènes de référence, on va effectuer pour chaque attribut $A_j$, un certain nombre de mesure, par exemple 100 000 mesures, avec différents types d'appareils APP équipés de différents capteurs dont celui fournissant l'attribut considéré, tous ces appareils étant placés dans une condition correspondant à la scène de référence et ce à différents endroits de la planète.

Par exemple, si la scène $S_k$ est une scène « BUS » on placera les différents appareils dans des BUS et l'on étudiera les différentes valeurs de l'attribut $A_j$ fourni par le ou les capteurs correspondants dont sont équipés les différents appareils APP.

Les MS mesures (MS = 100 000 par exemple) ayant fourni pour l'attribut $A_j$, MS valeurs courantes, permettent de déterminer pour ces valeurs, un histogramme (étape 30). A partir de cet histogramme, on peut donc déterminer (étape 31) connaissant le nombre MS et le nombre de fois qu'une valeur courante appartient à un intervalle donné (correspondant à une granularité donnée) la probabilité P ($A_j|S_k$) que l'attribut $A_j$ ait cette valeur courante connaissant la scène $S_k$.

On répète ces opérations pour tous les attributs $A_j$ et pour toutes les scènes de référence $S_k$ appartenant au corpus de scène de référence et l'ensemble des probabilités est alors mémorisé (étape 32) dans la mémoire MM2.

Le premier module de traitement pourra donc aisément à chaque noeud NDi du chemin PTH de l'arbre de décision, lire la probabilité que l'attribut considéré ait la valeur courante associée à ce noeud connaissant la scène détectée $S_d$, et lire également la probabilité que l'attribut considéré ait la valeur courante associée à ce noeud connaissant une scène $S_k$ différente de la scène $S_d$.

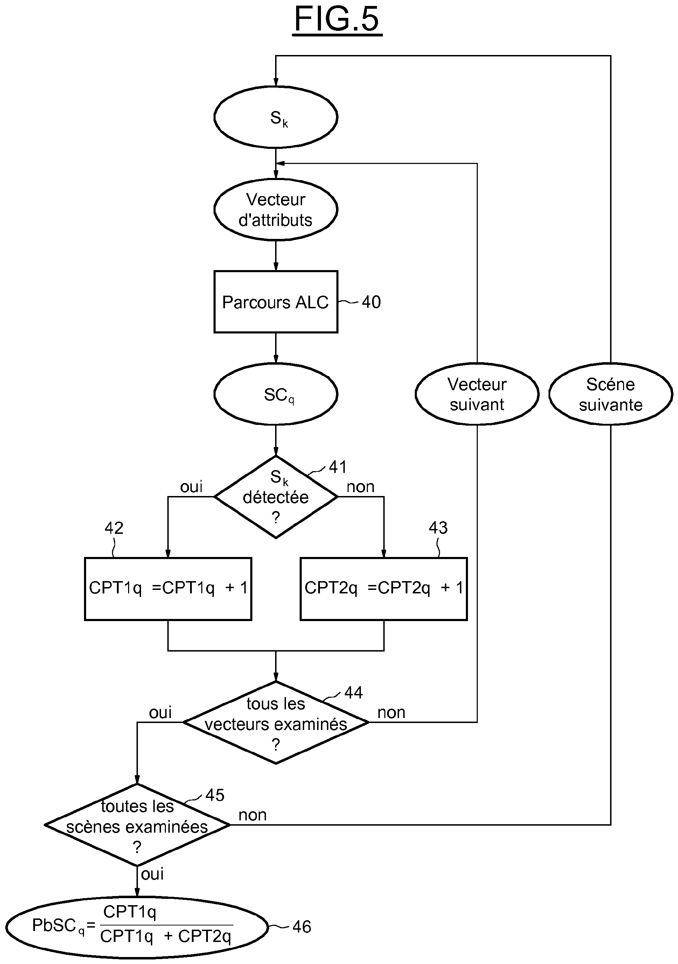

On se réfère maintenant plus particulièrement à la figure 5 pour décrire un exemple d'obtention de la fonction de transfert FCT permettant de convertir les scores SC en probabilité de confiance.

On suppose dans cet exemple que tous les scores SC varient entre -8 et +8 et on définit une granularité égale par exemple à 0,5.

En d'autres termes, toute valeur de score supérieure ou égale à q et inférieure à q + 0,5 sera affectée d'une valeur de score arbitraire SCq égale à q.

On affecte par ailleurs à chaque valeur SCq un premier compteur CPT1q et un deuxième compteur CPT2q, dont on reviendra plus en détails ci-après sur la signification.

On a vu précédemment que l'on avait effectué pour déterminer les différentes probabilités des valeurs d'attributs connaissant des scènes particulières, un certain nombre de mesures.

On suppose par conséquent ici que l'on est en possession d'un certain nombre, par exemple 100 000, vecteurs d'attributs correspondant aux différentes scènes de référence du corpus de scène.

Parmi ces 100 000 attributs, on peut par exemple en avoir un premier nombre correspondant à une première scène de référence, un deuxième nombre correspondant à une deuxième scène de référence et ainsi de suite.

Comme illustré pour la figure 5, on peut à titre indicatif mais non limitatif, examiner tous les vecteurs d'attributs correspondant à une scène de référence donnée $S_k$ puis examiner ensuite tous les vecteurs d'attributs correspondant à une autre scène de référence et ainsi de suite.

Bien entendu, en variante, il serait possible d'examiner ces vecteurs d'attributs dans un autre ordre quitte à les entrelacer.

Dans le cas présent, on fait parcourir (étape 40) l'arbre de décision ALC avec un premier vecteur d'attributs correspondant à la scène de référence $S_k$ et l'on obtient donc un score SCq qui a pu être calculé selon l'une des formules (I) (II) ou (III) précédemment indiquées.

On examine ensuite dans l'étape 41 si la scène qui a été détectée en sortie de l'arbre ALC correspond effectivement à la scène $S_k$.

Si tel est le cas, on incrémente le compteur CPT1q (étape 42).

Dans le cas contraire, on incrémente le compteur CPT2q (étape 43).

Puis, on répète ces opérations 40, 41, 42 et 43 pour chaque autre vecteur d'attributs associé à la scène de référence $S_k$.

Lorsque tous les vecteurs d'attributs ont été examinés (étape 44) on passe à la scène de référence suivante et l'on répète les opérations 40, 41, 42, 43, 44 tant que toutes les scènes de référence n'ont pas été examinées (étape 45).

Une fois que toutes les scènes de référence ont été examinées, c'est-à-dire que tous les vecteurs d'attributs ont été considérés, on peut alors déterminer pour chaque score SCq la probabilité de confiance PbSCq égale au rapport entre la valeur du compteur CPT1q et la somme des valeurs des deux compteurs CPT1q et CPT2q (étape 46).

Les valeurs de probabilités entre les différentes valeurs discrètes PbSCq peuvent alors être obtenues par exemple par une interpolation, en particulier linéaire.

Les inventeurs ont par ailleurs observé que certains attributs n'étaient pas forcément pertinents pour discriminer des scènes de référence.

Ceci est vrai pour tout type de classifieur en particulier un arbre de décision, et tout ce qui suit s'applique à tout type de classifieur en particulier à un arbre de décision.

A des fins de simplification du texte on ne mentionnera dans la suite de cette description que l'arbre de décision.

Il est alors particulièrement intéressant lors de la construction d'un arbre de décision, de prendre en compte uniquement les attributs les plus pertinents statistiquement parmi toute une liste d'attributs possibles.

Ceci permet de réduire la taille de l'arbre de décision, et par conséquent la taille mémoire nécessaire à son implémentation tout en simplifiant cette implémentation.

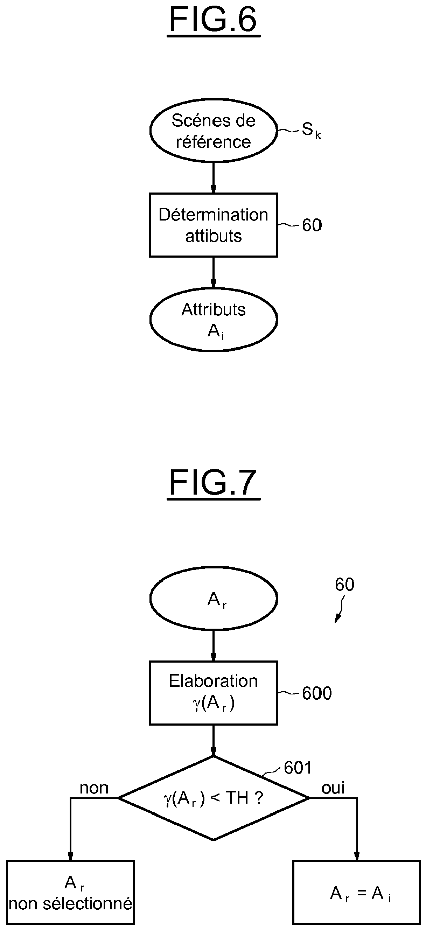

Un exemple de détermination préalable 60 d'attributs $A_i$ est illustré sur les figures 6 à 9.

Plus précisément, la phase préalable 60 de détermination des attributs comporte une élaboration 600, pour chaque attribut $A_r$ de référence d'un ensemble d'attributs de référence possible, d'un facteur de mérite $\gamma(A_r)$ représentatif

de la capacité de l'attribut de référence à discriminer les différentes scènes de référence, et une sélection 601 desdits attributs $A_i$ de l'arbre de décision parmi les attributs de référence $A_r$ en fonction de leur facteur de mérite.

Et, comme illustré sur la figure 7, cette sélection comprend pour chaque attribut de référence $A_r$ une comparaison de la valeur de son facteur de mérite $\gamma(A_r)$ à un seuil TH.

On sélectionne alors comme attributs $A_i$, les attributs $A_r$ ayant une valeur de facteur de mérite inférieure au seuil.

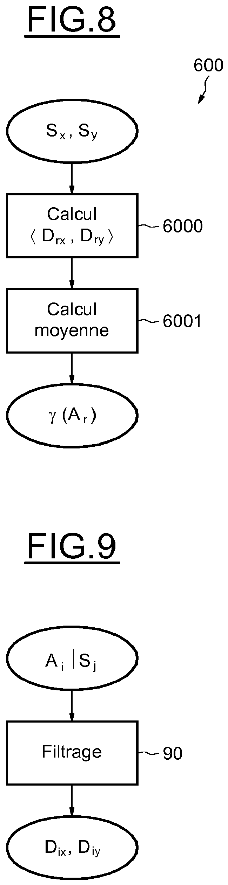

Comme illustré sur la figure 8, l'élaboration du facteur de mérite $\gamma(A_r)$ d'un attribut de référence, comprend une élaboration de paramètres intermédiaires relatifs à des couples de scènes de références $S_x$, $S_y$.

L'élaboration de chaque paramètre intermédiaire relatif à un couple de scènes de références $S_x$, $S_y$ comporte un calcul 6000 du produit scalaire canonique entre une première distribution $D_{rx}$ de probabilités des valeurs de l'attribut de référence connaissant une première scène de référence $S_x$ et une deuxième distribution de probabilités $D_{ry}$ des valeurs de l'attribut de référence connaissant une deuxième scène de référence $S_y$.

$D_{rx}$ est égal à $P(A_r|S_x)$ et $D_{ry}$ est égal à $P(A_r|S_y)$.

Ce produit scalaire $S_{xy}(A_r)$ est défini par la formule (IV) en annexe.

Dans cette formule, le produit scalaire de deux fonctions discrètes ayant n composants est défini comme étant la somme des n produits élémentaires des composantes homologues des deux fonctions.

Le paramètre intermédiaire relatif à un couple de scène Sx, Sy est égal à $S_{xy}(A_r)/(S_{xx}(A_r) \cdot S_{yy}(A_r))^{1/2}$.

Puis, on calcule (étape 6001) (formule V) la moyenne $\text{mean}_{x,y}$ de tous les paramètres intermédiaires pour tous les couples de scènes de référence $S_x$, $S_y$.

Il est par ailleurs préférable, mais non indispensable, que chaque première distribution de probabilités $D_{ix}$ et chaque deuxième distribution de probabilités $D_{iy}$ résulte d'un filtrage 90 (figure 9) des valeurs de l'attribut considéré $A_i$ pour la scène de référence Sj considérée.

Plus précisément, pour chaque attribut $A_i$ et pour chaque scène Sj on calcule les paramètres $\text{min}_{i,j} = \text{min}(A_i|S_j)$ et $\text{max}_{i,j} = \text{max}(A_i|S_j)$, min et max désignant respectivement les valeurs minimales et maximales des valeurs de l'attribut $A_i$ connaissant la scène $S_j$.

Puis, on élimine les valeurs situées à l'extérieur de l'intervalle

$$[\max(\min_{i,j}, \mu_{i,j} - 3\sigma_{i,j}) \ ... \ \min(\max_{ij}, \mu_{i,j} + 3\sigma_{i,j})]$$

Dans cet intervalle, $\mu_{i,j}$ et $\sigma_{i,j}$ sont respectivement définis par les formules (VI) et (VII) en annexe. Dans la formule (VI) « mean » est l'opérateur « moyenne ».

Dans les formules (VI) et (VII), $A_{i,k}$ représente la valeur de l'attribut i du vecteur k. Ce vecteur appartient à une scène j.

Dans la formule (VI) on fait la somme en utilisant tous les vecteurs de la base de données associés à une scène j afin de calculer la valeur moyenne de l'attribut i pour la scène j.

La formule (VII) permet de déterminer l'écart-type associé à cette valeur moyenne.

Bien entendu, l'intervalle mentionné ci-avant n'est qu'un exemple non limitatif d'intervalle possible.

Comme indiqué ci avant, bien que cette phase préalable 60 de détermination des attributs les plus pertinents ait été décrite en relation avec un arbre de décision, cette détermination préalable d'attributs peut s'appliquer à tout algorithme de classification, comme par exemple des réseaux de neurones, ou alors des algorithmes connus par l'homme du métier sous la dénomination « Support Vectors Machines » ou « Gaussian Mixture Model ».

ANNEXE

$$SC = \sum_{i \in PTH} log\left(\frac{P(A_i|S_d)}{\frac{1}{N-1} \cdot \sum_{k=0, \neq d}^{N-1} P(A_i|S_k)}\right) \qquad (I)$$

$$SC = \sum_{i \in PTH} log\left(\frac{P(A_i|S_d)}{\max_{k \neq d}(P(A_i|S_k))}\right) \qquad (II)$$

$$SC = \sum_{i \in PTH} w_i \; log \left( \frac{P\left(A_i \middle| S_d\right)}{\frac{1}{N-1} \cdot \sum_{k=0, \neq d}^{N-1} P\left(A_i \middle| S_k\right)} \right) \qquad (III)$$

$$S_{xy}(A_r) = \langle D_{rx}, D_{ry} \rangle \qquad (IV)$$

$$\gamma(A_r) = mean_{x,y} \left( \frac{S_{xy}\,(A_r)}{\sqrt{S_{xx}\,(A_r) S_{yy}(A_r)}} \right) \qquad (V)$$

$$\mu_{i,j} = mean\left(A_i \middle| S_j\right) = \frac{1}{N_{i,j}} \sum_{k=0}^{N_{i,j}-1} A_{i,k} \qquad (VI)$$

$$\sigma_{i,j} = \sqrt{\left( \frac{1}{N_{i,j}} \sum_{k=0}^{N_{i,j}-1} A_{i,k}{}^2 \right) - \mu_{i,j}{}^2} \qquad (VII)$$

## Revendications

1. Procédé de détection en temps réel d'au moins une scène par un appareil parmi un ensemble de scènes de référence possibles, comprenant une acquisition de valeurs courantes d'attributs (Ai) à partir de valeurs de mesures fournies par des capteurs (CPTj) et un parcours (20) d'un chemin (PTH) au sein d'un arbre de décision (ALC) dont les noeuds ($ND_i$) sont respectivement associés à des test sur ces attributs (Ai) en prenant en compte à chaque noeud ($ND_i$) du chemin, la valeur courante de l'attribut correspondant (Ai) de façon à obtenir en sortie du chemin une scène ($S_d$) parmi l'ensemble de scènes de référence ($S_k$), ladite scène obtenue formant la scène détectée ($S_d$), procédé comprenant en outre une élaboration d'un indice de confiance (SC) associé à la scène détectée ($S_d$).

2. Procédé selon la revendication 1, dans lequel l'élaboration de l'indice de confiance est effectuée après la détection de la scène détectée ($S_d$) à partir de la connaissance de cette scène détectée.

3. Procédé selon la revendication 1 ou 2, dans lequel la détermination de l'indice de confiance (SC) comprend un parcours supplémentaire (20) dudit chemin (PTH) de l'arbre de décision (ALC) avec les mêmes valeurs courantes d'attributs, le parcours supplémentaire comportant à chaque noeud dudit chemin, une prise en compte d'une première probabilité ($P(A_i|S_d)$) que l'attribut correspondant (Ai) ait ladite valeur courante connaissant la scène détectée ($S_d$) et pour chaque scène de référence ($S_k$, k≠d) différente de la scène détectée ($S_d$), une prise en compte d'une deuxième probabilité ($P(A_i|S_k)$) que l'attribut correspondant ait la valeur courante connaissant cette scène de référence ($S_k$), une détermination d'un indice de confiance initial (SC) à partir de toutes les premières et deuxièmes probabilités prise en compte le long du chemin parcouru, et ladite élaboration de l'indice de confiance (SC) est effectuée à partir de cet indice de confiance initial (SC).

4. Procédé selon la revendication 3, dans lequel la détermination de l'indice de confiance initial (SC) comprend une détermination pour chaque noeud du chemin de la moyenne desdites deuxièmes probabilités ($P(A_i|S_k)$) associées à ce noeud et du logarithme d'un rapport entre la première probabilité ($P(A_i|S_d)$) associée à ce noeud et ladite moyenne, et une somme sur tous les noeuds du chemin desdits logarithmes.

5. Procédé selon la revendication 3, dans lequel la détermination de l'indice de confiance initial (SC) comprend une détermination pour chaque noeud du chemin de la moyenne desdites deuxièmes probabilités ($P(A_i|S_k)$) associées à ce noeud et du logarithme d'un rapport entre la première probabilité ($P(A_i|S_d)$) associée à ce noeud et ladite moyenne, et une somme sur tous les noeuds du chemin desdits logarithmes respectivement pondérés par des coefficients de pondération (wi) choisis pour accorder plus de poids aux logarithmes associés aux premiers noeuds du chemin.

**6.** Procédé selon la revendication 5, dans lequel chaque coefficient de pondération (wi) est positif.

**7.** Procédé selon la revendication 6, dans lequel, pour un coefficient initial supérieur à un, le coefficient de pondération (wi) associé à un noeud courant est pris égal à la racine carrée du coefficient de pondération ($w_{i-1}$) associé au noeud précédent.

**8.** Procédé selon la revendication 6, dans lequel le coefficient de pondération (wi) associé à un noeud courant de rang i est pris égal à $\alpha^i$ où a est un coefficient positif et inférieur à 1.

**9.** Procédé selon la revendication 3, dans lequel la détermination de l'indice de confiance initial comprend une détermination pour chaque noeud du chemin, du maximum desdites deuxièmes probabilités ($P(A_i|S_k)$) associées à ce noeud et du logarithme d'un rapport entre la première probabilité ($P(A_i|S_d)$) associée à ce noeud et ledit maximum, et une somme sur tous les noeuds du chemin desdits logarithmes.

**10.** Procédé selon l'une des revendications 3 à 9, dans lequel l'élaboration de l'indice de confiance (SC) comprend une normalisation de l'indice de confiance initial faisant intervenir la longueur dudit chemin (PTH).

**11.** Procédé selon l'une des revendications précédentes, comprenant en outre une conversion de l'indice de confiance (SC) en une probabilité de confiance à l'aide d'une fonction de conversion (FCT) prédéterminée.

**12.** Procédé selon l'une des revendications précédentes, comprenant en outre une phase préalable (60) de détermination desdits attributs (Ai) compte tenu de l'ensemble de scènes de référence ($S_k$,) possibles.

**13.** Procédé selon la revendication 12, dans lequel ladite phase préalable (60) comprend une élaboration (600) pour chaque attribut de référence ($A_r$) d'un ensemble d'attributs de référence possibles, d'un facteur de mérite ($\gamma(A_r)$) représentatif de la capacité de l'attribut de référence ($A_r$) à discriminer les différentes scènes de référence ($S_k$), et une sélection desdits attributs (Ai) dudit arbre de décision parmi les attributs de référence ($A_r$) en fonction de leur facteur de mérite.

**14.** Procédé selon la revendication 13, dans lequel ladite sélection comprend pour chaque attribut de référence ($A_r$), une comparaison (601) de la valeur de son facteur de mérite ($\gamma(A_r)$) à un seuil (TH), et une sélection comme attributs ($A_i$), des attributs de référence ($A_r$) ayant une valeur de facteur de mérite inférieure audit seuil.

**15.** Procédé selon la revendication 13 ou 14, dans lequel l'élaboration du facteur de mérite d'un attribut de référence comprend une élaboration de paramètres intermédiaires respectivement relatifs à des couples de scènes de référence ($S_x$, $S_y$), l'élaboration de chaque paramètre intermédiaire relatif à un couple de scène de référence comportant un calcul (6000) du produit scalaire canonique entre une première distribution de probabilités ($D_{rx}$) des valeurs de l'attribut de référence connaissant une première scène de référence ($S_x$) dudit couple et une deuxième distribution de probabilités ($D_{ry}$) des valeurs de l'attribut de référence connaissant une deuxième scène de référence ($S_y$) dudit couple, et une moyenne de tous les paramètres intermédiaires.

**16.** Procédé selon la revendication 15, dans lequel chaque première distribution de probabilités et chaque deuxième distribution de probabilités résulte d'un filtrage (90) des valeurs de l'attribut considéré (Ai) pour la scène de référence considérée (Sj).

**17.** Procédé selon l'une des revendications précédentes, dans lequel lesdits capteurs ($CPT_i$) sont choisis dans le groupe formé par un accéléromètre, un gyroscope, un magnétomètre, un capteur audio, un baromètre, un capteur de proximité, un capteur optique, un capteur de température, un capteur d'humidité, un capteur de luminosité.

**18.** Appareil, comprenant
des capteurs ($CPT_j$) configurés pour fournir des valeurs de mesure,
des moyens de détection (MDET) configurés pour détecter en temps réel au moins une scène parmi un ensemble de scènes de référence possibles et comportant des moyens de mémoire (MM1, MM2) stockant un module logiciel (ALC) formant un arbre de décision dont les noeuds sont respectivement associés à des tests sur des attributs et dont les sorties correspondent auxdites scènes de référence possibles, des moyens d'acquisition (ACQ) configurés pour acquérir des valeurs courantes desdits attributs, et des moyens de commande (MCM) configurés pour activer le module logiciel (ALC) avec lesdites valeurs courantes des attributs de façon à parcourir un chemin (PTH) au sein dudit arbre de décision et obtenir en sortie du chemin une scène ($S_d$) parmi l'ensemble de scènes de référence, ladite scène obtenue formant la scène détectée, et
des moyens de traitement (MTR) configurés pour élaborer un indice de confiance (SC) associé à la scène détectée.

19. Appareil selon la revendication 18, dans lequel les moyens de traitement (MTR) sont configurés pour élaborer l'indice de confiance (SC) une fois que la scène ($S_d$) a été détectée et à partir de la connaissance de cette scène détectée ($S_d$).

20. Appareil selon la revendication 18 ou 19, dans lequel les moyens de commande (MCM) sont configurés pour activer une deuxième fois le module logiciel (ALC) avec lesdites valeurs courantes des attributs et lui faire parcourir une deuxième fois ledit chemin (PTH), et les moyens de traitement (MTR) comprennent un premier module de traitement (MT1) configuré pour, à chaque noeud dudit chemin, prendre en compte une première probabilité que l'attribut correspondant ait ladite valeur courante connaissant la scène détectée et pour chaque scène de référence différente de la scène détectée, prendre en compte une deuxième probabilité que l'attribut correspondant ait la valeur courante connaissant cette scène de référence, un deuxième module de traitement (MT2) configuré pour effectuer une détermination d'un indice de confiance initial (SC) à partir de toutes les premières et deuxièmes probabilités prises en compte le long du chemin et un troisième module de traitement (MT3) configuré pour effectuer ladite élaboration de l'indice de confiance à partir de cet indice de confiance initial.

21. Appareil selon la revendication 20, dans lequel les moyens de mémoire (MM2) contiennent lesdites premières et deuxièmes probabilités et le premier module est configuré pour lire lesdites premières et deuxièmes probabilités dans les moyens de mémoire (MM2).

22. Appareil selon la revendication 20 ou 21, dans lequel le deuxième module de traitement (MT2) est configuré pour effectuer une détermination pour chaque noeud du chemin, de la moyenne desdites deuxièmes probabilités associées à ce noeud et du logarithme d'un rapport entre la première probabilité associée à ce noeud et ladite moyenne, et pour effectuer une somme desdits logarithmes sur tous les noeuds du chemin.

23. Appareil selon la revendication 20 ou 21, dans lequel le deuxième module de traitement (MT2) est configuré pour effectuer une détermination pour chaque noeud du chemin, de la moyenne desdites deuxièmes probabilités associées à ce noeud et du logarithme d'un rapport entre la première probabilité associée à ce noeud et ladite moyenne, et pour effectuer une somme sur tous les noeuds du chemin desdits logarithmes respectivement pondérés par des coefficients de pondération choisis pour accorder plus de poids aux logarithmes associés aux premiers noeuds du chemin.

24. Appareil selon la revendication 23, dans lequel chaque coefficient de pondération est positif.

25. Appareil selon la revendication 24, dans lequel, pour un coefficient initial supérieur à un, le coefficient de pondération associé à un noeud courant est égal à la racine carrée du coefficient de pondération associé au noeud précédent.

26. Appareil selon la revendication 24, dans lequel le coefficient de pondération associé à un noeud courant de rang i est égal à $\alpha^i$ où $\alpha$ est un coefficient positif et inférieur à 1.

27. Appareil selon la revendication 20 ou 21, dans lequel le deuxième module de traitement (MT2) est configuré pour effectuer une détermination pour chaque noeud du chemin du maximum desdites deuxièmes probabilités associées à ce noeud et du logarithme d'un rapport entre la première probabilité associée à ce noeud et ledit maximum, et pour effectuer une somme sur tous les noeuds du chemin desdits logarithmes.

28. Appareil selon l'une des revendications 20 à 27, dans lequel les moyens de traitement (MTR) comprennent un troisième module (MT3) configuré pour effectuer une normalisation de l'indice de confiance initial faisant intervenir la longueur dudit chemin.

29. Appareil selon l'une des revendications 18 à 28, comprenant en outre des moyens de conversion (MCV) configurés pour effectuer une conversion de l'indice de confiance en une probabilité de confiance à l'aide d'une fonction de conversion stockée dans ladite mémoire.

30. Appareil selon l'une des revendications 18 à 29, dans lequel lesdits capteurs (CPTj) sont choisis dans le groupe formé par un accéléromètre, un gyroscope, un magnétomètre, un capteur audio, un baromètre, un capteur de proximité, un capteur optique, un capteur de température, un capteur d'humidité, un capteur de luminosité.

**31.** Appareil selon l'une des revendications 18 à 30, formant un téléphone mobile cellulaire ou une tablette numérique ou une montre intelligente.

# FIG.1

MM1     MM2

ANT

MDET

ALC

BLC

MCM    ACQ

PR

MTR

APP

MT1

MT2  MCV

MCTRL

MT3

CPT1  CPT2   CPTj  CPTM

# FIG.2

# FIG.3

# FIG.4

# FIG.5

$S_k$

Vecteur
d'attributs

Parcours ALC ⌐ 40

$SC_q$

$S_k$ détectée ? — 41

oui → non

Vecteur
suivant

Scéne
suivante

42
CPT1q = CPT1q + 1

43
CPT2q = CPT2q + 1

tous les
vecteurs examinés
? — 44

oui → non

toutes les
scènes examinées
? — 45

non

oui

$$PbSC_q = \frac{CPT1q}{CPT1q + CPT2q}$$ — 46

## FIG.6

Scénes de référence $\sim S_k$

Détermination attibuts $\sim 60$

Attributs $A_i$

## FIG.7

$A_r$

$\sim 60$

Elaboration $\gamma(A_r)$ $\sim 600$

$\sim 601$

non    $\gamma(A_r) < TH$ ?    oui

$A_r$ non sélectionné

$A_r = A_i$

# FIG.8

600

$S_x$ , $S_y$

↓

Calcul
$\langle D_{rx}$ , $D_{ry} \rangle$ — 6000

↓

Calcul
moyenne — 6001

↓

$\gamma$ ( $A_r$ )

# FIG.9

$A_i \mid S_j$

↓

Filtrage — 90

↓

$D_{ix}$ , $D_{iy}$

**Europäisches Patentamt**
**European Patent Office**
**Office européen des brevets**

# RAPPORT DE RECHERCHE EUROPEENNE

Numéro de la demande

EP 18 15 8145

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2012/076711 A1 (THALES SA [FR]; GUIGNARD THIERRY [FR]; LESTIEUX SEBASTIEN [FR]) 14 juin 2012 (2012-06-14) * le document en entier * ----- | 1-31 | INV. G06Q50/10 |

**DOMAINES TECHNIQUES RECHERCHES (IPC)**

G06Q

Le présent rapport a été établi pour toutes les revendications

| Lieu de la recherche | Date d'achèvement de la recherche | Examinateur |
|---|---|---|
| Munich | 13 mars 2018 | Hanon, David |

**ANNEXE AU RAPPORT DE RECHERCHE EUROPEENNE
RELATIF A LA DEMANDE DE BREVET EUROPEEN NO.**

EP 18 15 8145

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-03-2018

| Document brevet cité au rapport de recherche | Date de publication | Membre(s) de la famille de brevet(s) | | Date de publication |
|---|---|---|---|---|
| WO 2012076711 A1 | 14-06-2012 | AU | 2011340433 A1 | 18-07-2013 |
| | | EP | 2649465 A1 | 16-10-2013 |
| | | FR | 2968793 A1 | 15-06-2012 |
| | | US | 2014321243 A1 | 30-10-2014 |
| | | WO | 2012076711 A1 | 14-06-2012 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- A survey on Smartphone Based Systems for Opportunistic User Context Recognition. **SYED AMIR HOSEINI-TABATABAEI.** Center for communication Systems Research. University of Surrey, 29 Juin 2013

- **RICCO RAKOTOMALALA.** Arbres de Décision. *MODULAD,* 2005, vol. 33, 163-187